# EUROPEAN PATENT APPLICATION

(11) **EP 2 127 927 A1**
(43) Date of publication of application: **02.12.2009**
(21) Application number: 09161404.0
(22) Date of filing: 28.05.2009
(51) Int. Cl.: B60J 5/04

(54) **Interchangeable door**

(30) Priority: 29.05.2008 IL 19180708; 22.01.2009 IL 19669009
(71) Applicant: Plasan Sasa Ltd, 13870 M.P. Marom Hagalil (IL)
(72) Inventor: Khan, Nir, Nahariya 22344 (IL)
(74) Representative: Minoja, Fabrizio

(57) **Abstract**

An interchangeable door system (IDS) having a central axis (X) and at least two different opening configurations defined by corresponding different locations of the central axis. The system comprises a wall (10) formed with a wall opening (14) having a circumferential rim (16) and a surface pre-formed with at least a first (VP₁) and a second (VP₂) surface-port. The first and second surface-ports are located along the circumferential rim at locations spaced apart from one another along a direction transverse to the central axis. The system further comprises a door (20) having an outer contour (26) corresponding in shape and dimensions to the opening and being adapted for revolving about the central axis, thereby opening and closing the wall opening. The door is pre-formed with at least a first (DP₁) and a second (DP₂) door-port, the door-ports being located along the outer contour at locations corresponding to the locations of the first and second surface-ports. The system also comprises an interchangeable door arrangement (IDA) adapted to provide selective engagement between each door-port and its corresponding surface-port, forming an engaged port-pair whose location defines the location of the central axis, to thereby bring the central axis into a location of the engaged port-pair, so as to allow the door to operate in the different configurations.

## Description

### FIELD OF THE INVENTION

This invention relates to a vehicle door, in particular, door which may be selectively opened in various directions.

### BACKGROUND OF THE INVENTION

It has been known to use light military/armored vehicles in order to deliver military personnel into a fighting zone, as well as using such vehicles, after the military personnel has dismounted therefrom, as a fighting station, i.e. an armored post behind which the military personnel may take cover.

It has also been known to design vehicles differently according to the intended use thereof, in particular, designing the doors of a vehicle according to the expected dispersion formation of the military personnel thereabout.

A vehicle of the kind to which the present invention refers normally comprises a plurality of doors, e.g. four doors, two on each side of the vehicle, though in addition or instead one or more side doors, the vehicle may have a back door, or it may have more or less than four side doors.

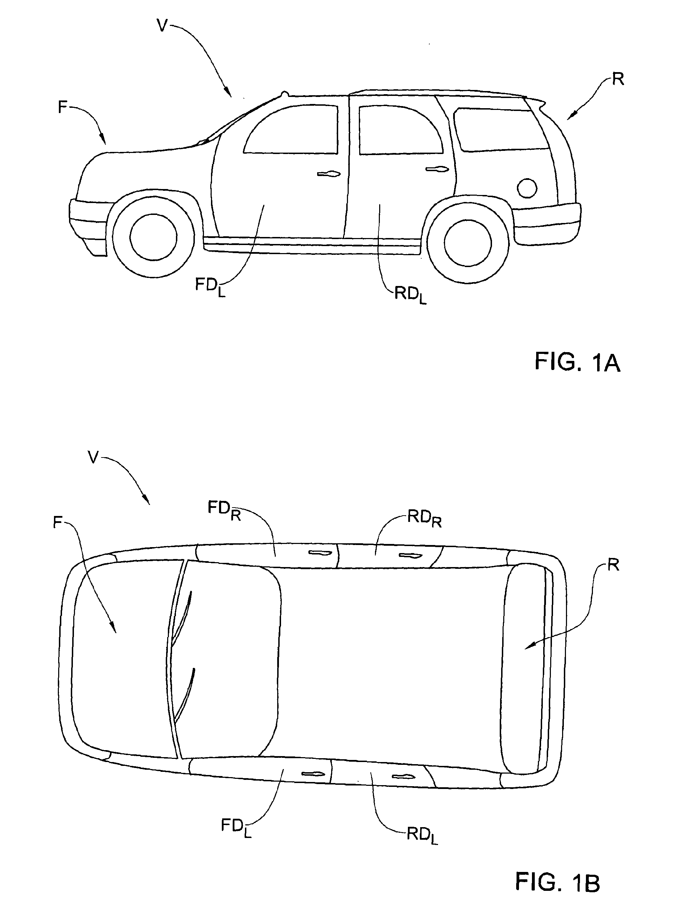

For purpose of simplicity, reference will now be made to a standard vehicle shown in Figs. 1A to 1C, having four side doors and the following terms will hereinafter be used with respect thereto:
***'front door'*** - the door adjacent the front end of the vehicle or any variation thereof;
***'rear door'*** - the door adjacent the rear end of the vehicle, or any variation thereof;
***'same-side doors'*** - two or more doors located on the same side of a vehicle, e.g. a left front door and a left rear door, or any variation thereof;
***'door internal side (IS)'*** - the side of the door when closed, which faces towards the interior of the vehicle, or any variation thereof; and
***'door external side (ES)'*** - the side of the door, when closed, which faces towards the exterior of the vehicle, or any variation thereof.
***'front-hinged door'*** - a door mounted such that in an open position, the external side thereof faces the front of the vehicle, and the internal side thereof faces the rear of the vehicle.
***'rear-hinged door'*** - a door mounted such that in an open position, the external side thereof faces the rear of the vehicle, and the internal side thereof faces the front of the vehicle.

With respect to the same-side doors (front and rear door of the same side of the vehicle), two main door-opening configuration modes thereof, when opened, are known today in an armored vehicle, as follows:
***'regular mode'*** - in which the doors are either both front-hinged or both rear-hinged; in this mode military personnel, when leaving the vehicle, may take cover behind the vehicle doors, while facing in the same direction; and
***'mirror mode'*** - in which one of the doors is front-hinged while the other is rear-hinged; in this mode military personnel, when leaving the vehicle, may take cover behind the vehicle doors, facing both front and rear of the vehicle.

### SUMMARY OF THE INVENTION

According to one aspect of the present invention, there is provided an interchangeable door system (IDS) having a central axis and at least two different opening configurations defined by corresponding different locations of said central axis, the system comprising:
i. a wall formed with a wall opening having a circumferential rim, said wall having a surface pre-formed with at least a first and a second surface-port, the first and second surface-ports being located along said circumferential rim at locations spaced apart from one another along a direction transverse to said central axis;
ii. a door having an outer contour corresponding in shape and dimensions to said opening and being adapted for revolving about said central axis, thereby opening and closing said wall opening, said door being pre-formed with at least a first and a second door-port, the door-ports being located along said outer contour at locations corresponding to the locations of said first and second surface-ports; and
iii. an interchangeable door arrangement (IDA) adapted to provide selective engagement between each door-port and its corresponding surface-port, forming an engaged port-pair whose location defines the location of the central axis, to thereby bring said central axis into a location of the engaged port-pair, so as to allow said vehicle door to operate in said different configurations.

Said wall in which the wall opening is formed may be a part of a vehicle, i.e. side, front, rear, top or bottom wall of the vehicle, in which case said surface-port is a *'vehicle-port'* which will be referred to as such hereinafter. Said wall and/or said door may be armored, i.e. may be built with at least a portion thereof comprising a base to be protected and an armor layer attached to said base and facing the exterior of the vehicle.

Said vehicle may comprise a front door and a rear door on one side thereof, fitted in respective front and rear openings, each door being fitted with said IDA. Each door may be formed with the first and the second door-port, one of which is closer to the vehicle front and the other is closer to the vehicle rear, and each opening may be correspondingly formed with a first and a second vehicle-port at locations corresponding to the locations of said first and second door-port.

The above arrangement allows any of the front and rear door to be either front-hinged or rear-hinged, providing a versatile configuration which may be adapted to various vehicle characteristics, and operational needs.

The above arrangement yields at least four different opening configurations for same-side doors of the vehicle as listed below, depending on the respective position of the engaged port-pair:
***'first normal mode'* -** both doors are front-hinged;
***'first mirror mode'* -** the front door is front-hinged while the rear door is rear-hinged;
***'second normal mode'*** - both doors are rear-hinged; and
***'second mirror mode'*** - the front door is rear-hinged and the rear door is front-hinged.

The IDA may comprise a hinge unit having a first hinge portion and a second hinge portion articulated to one another via a hinge whose axis constitutes said central axis, to allow said door to revolve about said central axis, wherein said hinge unit is adapted for being selectively attached to each one of the first or second door-port and corresponding vehicle-port, to form said engaged port-pair, so as to determine the desired opening configuration of the doors.

The IDS may be adapted for supporting the vehicle door from disengaging from the wall of the vehicle, when changing its opening configuration, e.g. when dismounting the hinge unit from one vehicle-port/door-port pair and mounting it on another pair. For this purpose, the IDS may comprise any suitable securing mechanism adapted for use outside or inside the vehicle.

In accordance with another aspect of the invention, there is provided a method for producing a vehicle, including providing the vehicle with the IDS described above for forming said engaged port-pair in at least two different locations depending on the desired door opening configuration. Forming the desired configuration may be performed by the manufacturer on the site where the vehicle is manufactured, or by military personnel on a site different from the manufacturing site, which for example may be at least any one of the following:
***'base'* -** e.g. a base camp where the vehicles are located before departing to their mission;
***'close proximity'* -** on the way to, though at a safe distance from, a mission zone; and even;
***'on site'* -** from within the vehicle upon reaching its destination.

Such an arrangement and flexibility in choosing and forming the desired configuration may provide military personnel with the possibility to use the same vehicle for various missions. In addition, the *'on site'* option may allow the military personnel to quickly adjust the vehicle to various unexpected situations without the need to exit, and optionally switch vehicles.

In the *'on site'* case, the above mentioned securing mechanism may be built-in within the vehicle. Such a mechanism may be, for example, a crossbeam supported at the circumferential rim and engaging the vehicle door.

It should be appreciated that a plurality of configurations may be contemplated depending on the number and locations of the preformed door-ports and vehicle-ports of the vehicle. For example, in addition or as an alternative to the above described configurations, a door-port and corresponding vehicle-port may be formed at the top or bottom edge of the corresponding outer contour of the door and circumferential rim of the wall opening, allowing the vehicle door to be either top-hinged or bottom-hinged. In other words, the door may open, respectively, upwards or downwards such that the external side thereof faces in the upward or downward direction of the vehicle. In particular, in the former example, i.e. when opening upwards, the vehicle door may be used as a roof protecting military personnel from threat incoming from above, while in the latter example, i.e. when opening downwards, the door may be used as a ramp for the military personnel situated within the vehicle.

The IDA may further comprise a locking unit constructed for selectively allowing said vehicle door to assume a first, locked position, in which said vehicle door is prevented from revolving about said axis, and a second, unlocked position in which said vehicle door is free to revolve about said axis.

The locking unit may also comprise an actuator constructed for selectively switching the position of the door from the unlocked to the locked position. Such an actuator may be a mechanical, hydraulic, pneumatic, electronic, or any combination of the above. Said actuator may be activated by an activator, for example, a handle of the vehicle door.

According to one example, said locking unit may comprise a first locking portion constructed for mounting onto said circumferential rim and a second locking portion constructed for mounting onto said vehicle door, said locking portions being lockingly engageable with each other. Thus, said locking unit may assume said first, locked position, in which said first locking portion is securely engaged with said second locking portion, preventing the vehicle door from revolving about said central axis, and said second, unlocked position in which said first locking portion is disengaged from said second locking portion, allowing the door to freely revolve about said axis.

According to the above example, the first locking portion and the second locking portion may also be constructed, similar to the hinge unit, for attachment to a port-pair (i.e. door-port and corresponding vehicle-port). By virtue of this, when the hinge unit is mounted onto a first port-pair engaged in accordance with a selected door opening configuration, the locking unit may be mounted onto a second, disengaged port-pair, and vise versa.

According to one design variation of the above example, said hinge unit and said locking unit may be completely mechanically separate from one another, and may be constructed for separate mounting onto said outer contour of the door and said circumferential rim of the wall opening. In this case, in operation, the locations of the hinge unit and locking unit are selected separately, i.e. the hinge unit may be attached to any one port-pair and the locking unit may be attached to any other port-pair.

According to another design variation of the above example, said hinge unit and said locking unit may be mounted on a mutual base constructed, in turn, to be mounted onto said vehicle door. In this case, in operation, the location of the hinge unit is constant with respect to the location of the locking unit and is defined by the shape of the base unit.

In particular, said base unit may be a straight longitudinal bar extending across the vehicle door, having mounted at one side thereof the hinge unit and at another side thereof the locking unit. In this case, the locking unit is always located opposite the hinge unit. The longitudinal bar may be formed with a rotation port constructed to receive an axle therethrough attached to the vehicle door, allowing the longitudinal bar to rotate about said axle so as the selectively position the hinge unit and locking unit at locations corresponding to their respective desired ports.

Alternatively, the base may have a shape which is other than straight, for example, a V shaped bar.

In addition, simple and easy switching from one configuration mode to another, for example, from normal mode to mirror mode, may be provided by switching the locations of the base along with its respective hinge unit and locking unit mounted thereon from one door to another. For example, this may be performed by removing the base of the front left side door of the vehicle from its axle and mounting it on the rear right side door of the vehicle, and removing the base unit of the front right side door of the vehicle from its axle and mounting on the rear left side door of the vehicle.

According to another example, said hinge unit and said locking unit may be integrally formed. In this case, the hinge unit and locking unit form one assembly constructed for attachment to the same pair of ports.

For example, said hinge unit may be in the form of a motorized hinge, wherein revolution of said first hinge portion about said second hinge portion is controlled by a built-in motor of the hinge. In such a case, the locking unit may be constituted by the hinge itself allowing it to assume said first, unlocked and said second, locked position.

In particular, when the hinge unit is motorized, it may retain the position of the door at any stage of opening/closing thereof, wherein the 'locked position' is defined as any position of the door in which the motor of the hinge prevents the door from revolving about the central axis.

The vehicle may be designed such that the hinge unit and locking unit are mounted on the external side of the vehicle and the door. Alternatively, the vehicle may be designed such that the hinge unit and locking unit are mounted onto the internal side of the vehicle and the door such that they are protected by the vehicle itself, e.g. when armored, from incoming threats.

According to another aspect of the present invention, there is provided an interchangeable door system (IDS) having two parallel central axes and two different opening configurations corresponding to said two central axes, the system comprising:
i. a wall formed with a wall opening having a circumferential rim, said wall having a surface pre-formed with at least a first and a second surface-port, the first and second surface-ports being located along said circumferential rim at locations opposite one another along a direction perpendicular to said central axes;
ii. a door having an outer contour corresponding in shape and dimensions to said opening and being adapted for revolving about both said central axes, thereby opening and closing said wall opening, said door being pre-formed with at least a first and a second door-port, the door-ports being located along said outer contour at locations corresponding to the locations of said first and second surface-ports; and
iii. an interchangeable door arrangement (IDA) comprising a first hinge arm connecting said first surface-port with said second door-port and a second hinge arm connecting said second surface-port with said first door-port, so as to allow said vehicle door to operate in said different configurations.

It is also important to note that the above described examples for the IDA may be used in vehicles having only one door, or one door on each wall or on a part of the walls thereof.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1A** is a schematic side view of a vehicle;
**Fig. 1B** is a schematic top view of the vehicle shown in Fig. 1A;
**Fig. 1C** is a schematic top view of the vehicle shown in Fig. 1A illustrating two door opening configurations;
**Fig. 2A** is a schematic partial side view of an IDS including a vehicle wall, a door and an IDA, according to one embodiment of the present invention;
**Fig. 2B** is a schematic isometric view of the IDA used in the IDS shown in Fig. 2A;
**Figs. 3A** and **3B** are schematic cross-sectional views of the vehicle wall taken along the line III-III in Fig. 2A, showing a front-hinged door and a rear-hinged door respectively, achieved using the IDA shown in Figs. 2A and 2B;
**Fig. 4** is a schematic partial side view of an IDS according to another embodiment of the present invention;
**Fig. 5** is a schematic isometric side view of a vehicle door having mounted thereon an IDA according to yet another embodiment of the present invention;
**Fig. 6** is a schematic isometric view of four vehicle doors with the IDA shown in Fig. 5 mounted onto one of them;
**Fig. 7** is a schematic side view of a vehicle door having mounted thereon the IDA shown in Figs. 5 and 6;
**Fig. 8A** and **8B** are schematic side views of a vehicle door having mounted thereon an IDA according to a further embodiment of the present invention, demonstrating two possible ways of attachment of the IDA to the door;
**Figs. 8C** through **8F** are schematic partial front views of a vehicle's door having mounted thereon the IDA shown in Figs. 8A and 8B, demonstrating four possible door opening configurations;
**Figs. 9A** and **9B** are schematic isometric views of IDAs, according to two additional embodiments of the present invention;
**Fig. 10** is a schematic partial front view of a vehicle wall and a door therein after an IDA according to the present invention has been removed therefrom, comprising a security mechanism; and
**Fig. 11A** is a schematic isometric view of an IDA according to another aspect of the present invention, when attached to a door;
**Fig. 11B** is a schematic section view of the IDA and door shown in Fig. 11A, in a closed position;
**Fig. 11C** is a schematic section view of the IDA and door shown in Fig. 11B, in two possible opening configuration; and
**Fig. 11D** is a schematic front view of a door fitted with two IDAs shown in Fig. 11A.

### DETAILED DESCRIPTION OF EMBODIMENTS

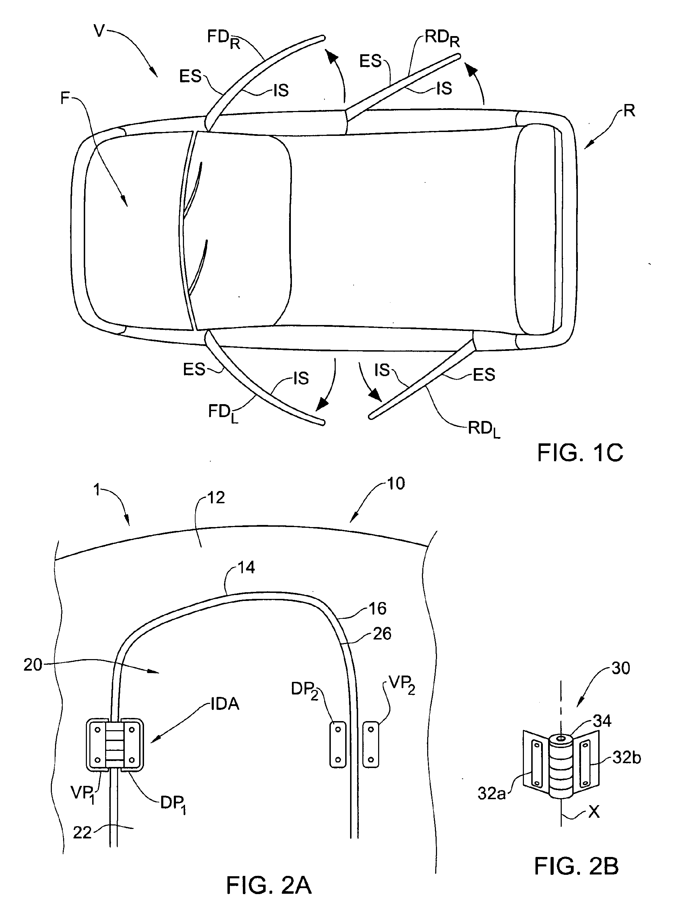

Attention is first drawn to Figs. 2A and 2B, in which an interchangeable door system **(IDS),** generally designated as **1,** is shown comprising a wall **10** (partially shown) of a vehicle body (not shown), a door **20** and an interchangeable door arrangement **IDA** attached to both the wall **10** and the door **20** so as to allow the door **20** to revolve with respect to the wall **10** about a central axis **X.**

The vehicle wall **10** has a side surface **12** formed with an opening **14** therein. The opening **14** has a circumferential rim **16** with two opposite side edges **16₁** and **16₂,** and is formed with a first vehicle-port **VP₁** located adjacent the side edge **16₁** of the circumferential rim **16** and a second vehicle-port **VP₂** located adjacent the side edge **16₂** of the circumferential rim **16.** In other words, the locations of the first and second vehicle-ports are disposed on different sides of the opening **14,** i.e. are spaced from each other along an axis **Y** perpendicular to the central axis **X,** by a distance exceeding dimension of the opening **14** along the axis **Y.**

The door **20** has an outer contour **26** corresponding in shape and dimension to the circumferential rim **16** of the opening **14.** The door **20** is formed with a first door-port **DP₁** located at a first location along the outer contour **26** and a second door-port **DP₂** located at a second location along the outer contour **26,** corresponding to the respective first and second locations of the first and second vehicle-ports **VP₁** and **VP₂.**

In the particular example shown in Figs. 2A and 2B, the **IDA** is constituted by a hinge unit **30** comprising a first hinge portion **32**a and a second hinge portion **32**b articulated to one another via a hinge **34** whose axis constitutes the central axis **X,** when the hinge is mounted to the vehicle wall **10** and the door **20.** Each hinge portion **32a, 32b** is formed with a hinge-port **HPᵥ** and **HP_{D},** which are designed for the respective attachment to the first vehicle-port **VP₁** and its corresponding first door-port **DP₁,** or to the second vehicle-port **VP₂** and its corresponding second door-port **DP₂.**

When attached as described above, the hinge unit **30** allows the door **20** to revolve about the central axis **X** to be selectively positioned in a closed position in which it closes the opening **14** and a plurality of open positions in which the opening **14** is open to different extents.

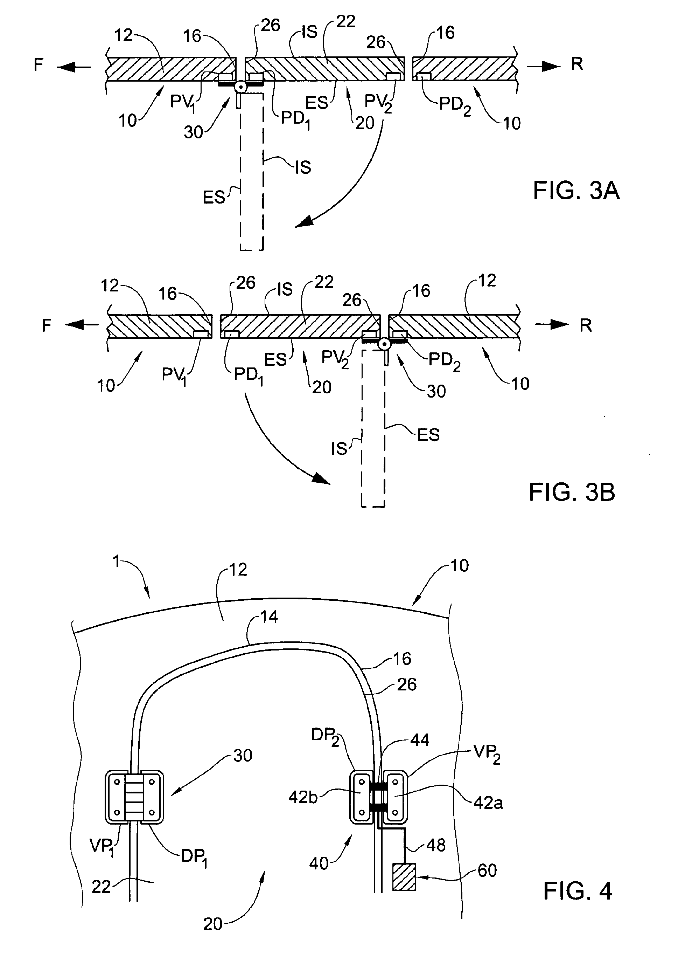

Turning now to Figs. 3A and 3B, there are shown two different door opening configurations. In Fig. 3A, the hinge unit **30** is attached to the vehicle-port **VP₁** and door-port **DP₁,** to be front-hinged, i.e. when opened, the external side **ES** of the door **20** faces the front **F** of the vehicle wall **10.**

In Fig. 3B, the hinge unit **30** is shown attached to the vehicle-port **VP₂** and door-port **DP₂,** e.g. after being removed from the vehicle-port **VP₁** and door-port **DP₁.** Under this configuration, being rear-hinged, the external side **ES** of the door **20,** when opened, faces the rear **R** of the vehicle wall **10.**

The above change of the opening configurations of the door **20** shown with reference to Figs. 3A and 3B, allows to switch a door from a front-hinged configuration to a rear-hinged configuration. This, in turn, allows changing configurations between the *'normal mode'* and *'mirror mode'* of use of the door **20,** e.g. when used as a rear door of a vehicle such as shown in Fig. 1C.

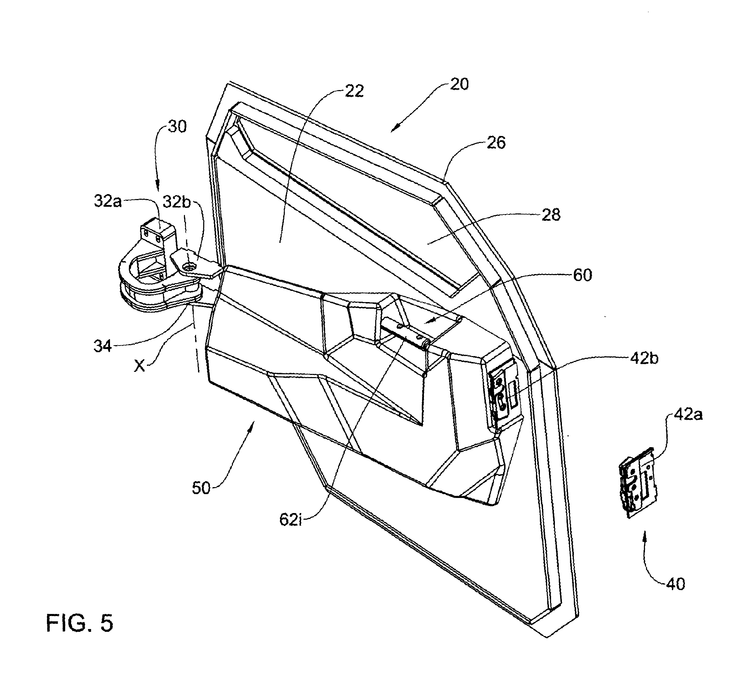

Turning now to Fig. 4, the IDA is shown to comprise, in addition to the hinge unit **30,** a locking unit **40** having a first locking portion **42a** and a second locking portion **42b,** adapted for engagement **44** therebetween. In assembly, the locking unit **40** is shown when the first locking portion **42a** is attached to the second vehicle-port **VP₂** and the second locking portion **42b** is attached to the second door-port **DP₂.** The first locking portion **42a** and the second locking portion **42b** are adapted for a locking engagement therebetween (schematically denoted **44),** such that when the first locking portion **42a** and the second locking portion **42b** are engaged with one another, the door is prevented from rotating about the central axis **X.** The locking unit **40** is coupled to and activated by an actuator mechanism **60** which will be further discussed with respect to Fig. 5. It should also be appreciated that a plurality of locking units **40** may be used.

It should be noted that since the hinge unit **30** and the locking unit **40** are two separate mechanisms, the vehicle wall **10** and the door **20** may be pre-formed with a plurality of respective vehicle-ports and door-ports constituting a corresponding plurality of port-pairs, and each of the hinge unit **30** and locking unit **40** may be attached to one such port-pair. Such flexibility in the determination of the location of the hinge unit **30** and locking unit **40** provides exceptional versatility in the possible door opening configurations.

Turning now to Fig. 5, the door **20** is shown with the hinge unit **30** and the locking unit **40** mounted on a mutual base **50.** The base **50** further comprises an actuator mechanism **60** coupled to the locking unit **40** and having an internal actuator handle **62_{I}** and an external actuator handle **62_{E}** (not seen). Each of the internal and the external actuator handles **62₁, 62_{E}** is adapted for switching the position of the locking unit **40** from a locked to an unlocked state so as to allow the door to selectively rotate about the central axis **X** or be affixed in place.

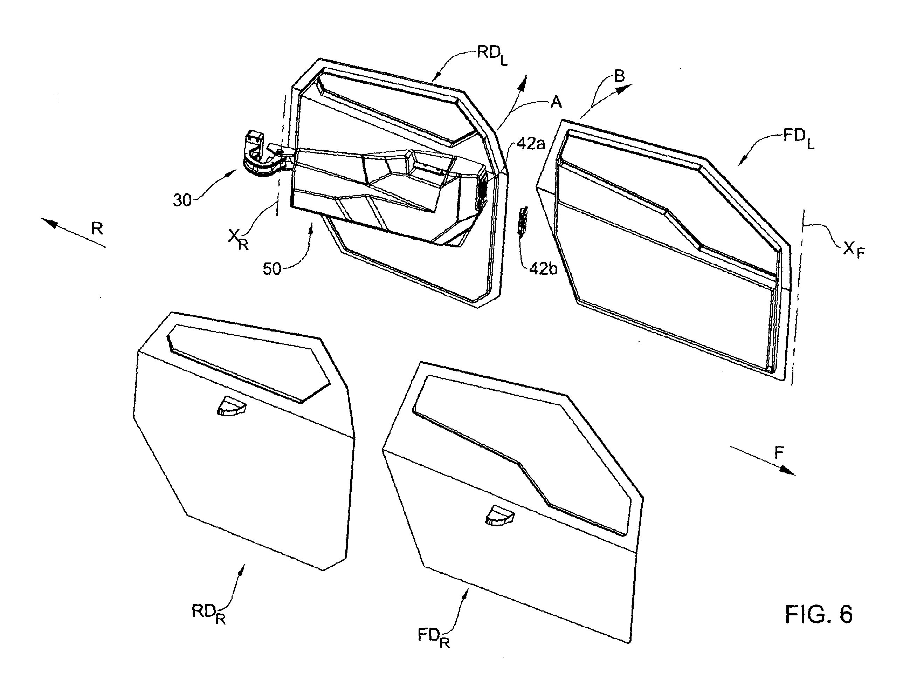

Turning now to Fig. 6, there are illustrated four doors **20** of a vehicle (not shown), more particularly, a set of left-side doors, and a set of right-side doors, denoted **FD_{R}, RD_{R}, FD_{L}** and **FD_{R}** similarly to doors of the vehicle shown in Fig. 1B. The rear left door **RD_{L}** is shown in a rear-hinged position, with the **IDA** installed such that the door is adapted to revolve about rear central axis **X_{R}** so as to open rearwards in the direction of arrow **A,** and the front left door **FD_{L}** is front-hinged, being adapted to revolve about front central axis **X_{F} (IDA** for this door is not shown) so as to open forwards in the direction of arrow **B,** thereby assuming a *'mirror'* opening configuration. The right same-side doors **FD_{R}, RD_{R}** are similarly arranged.

In order to switch the opening configuration of the doors from *'mirror'* to *'normal'*, the **IDAs** of the rear left door and the rear right door may be switched between them. In operation, the entire **IDA** may be removed from the rear left door **RD_{L}** and mounted on the rear right door **RD_{R}** and vise versa. In particular, the first hinge portion **32a** of the hinge unit **30** may be attached to the vehicle-port **VP₂** of the of the rear right door **RD_{R}** such as to face the front **F** of the vehicle and the first locking portion **42a** of the locking unit **40** may be attached to the vehicle-port **VP₁** of the of the rear right door **RD_{R}** such that as to now face the rear **R** of the vehicle. A similar operation may be performed for the **IDA** of the rear right door **RD_{R}.** Under the described configuration, the rear right door **RD_{R}** and the rear left door **RD_{L}** are front-hinged, i.e. open forwards, thus providing a *'normal'* opening configuration.

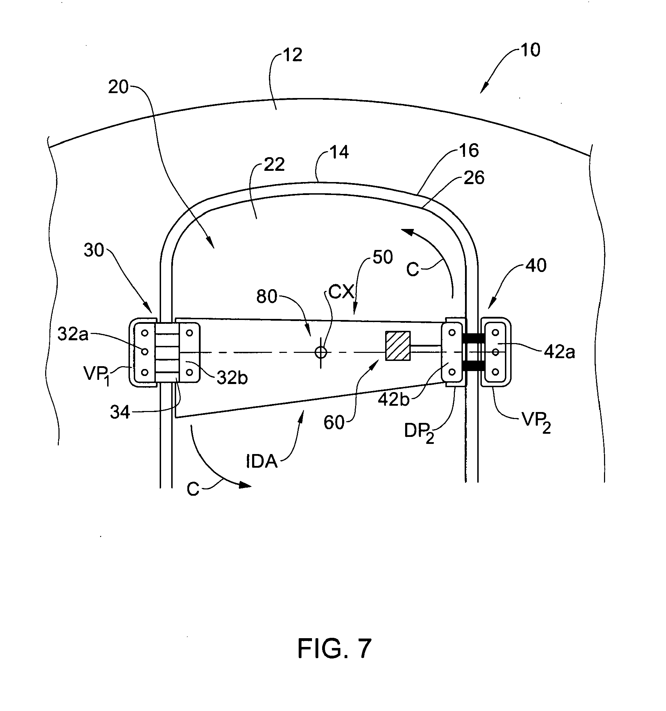

With reference to Fig. 7, the base **50** onto which the hinge unit **30** and locking unit **40** are mounted, may be mounted on a central axle **80** having a central axis **x**, and is adapted to rotate thereabout in the directions of arrows **C.** The central axis x is located at the mid-point of a line extending between the first port pair **VP₁, DP₁** and the second port pair **VP₂, DP₂.** Such an arrangement allows the **IDA** to swivel about the central axis **x** so as to selectively position the hinge unit **30** and the locking unit **40** opposite the first or the second port pair.

In operation of the **IDA** shown in Fig. 7, in order to switch the opening configuration of the door **20,** the first hinge portion **32a** and the first locking portion **42a** are first detached from their respective first and second vehicle-port **VP₁, VP₂.** Thereafter, the entire base **50** swivels about the axle **80,** until the hinge unit **30** is positioned opposite the second vehicle-port **VP₂** and the locking unit **40** is positioned opposite the first vehicle-port **VP₁.** The respective first portions **32a** and **42a** of the hinge unit **30** and locking unit **40** are then attached to the vehicle-ports **VP₂** and **VP₁.**

As clear from the above description, it is advantageous (though not absolutely necessary) that the door-ports and vehicle-ports be adapted for attachment thereto of both the hinge unit **30** and the locking unit **40.** Such an arrangement provides for easy and quick change of door opening configuration from 'normal' mode to 'mirror' mode and back.

It should also be noted that the vehicle door may be formed without an axle, and the entire IDA may be simply removed from the door and swiveled or rotated to assume a desire position. The term *'swiveled'* refers herein to revolving said IDA about an axis transverse to said vehicle door, similar to the previously mentioned swiveling about the central axle, whereas the term *'rotated'* refers to rotation about an axis perpendicular to the axis of the axle.

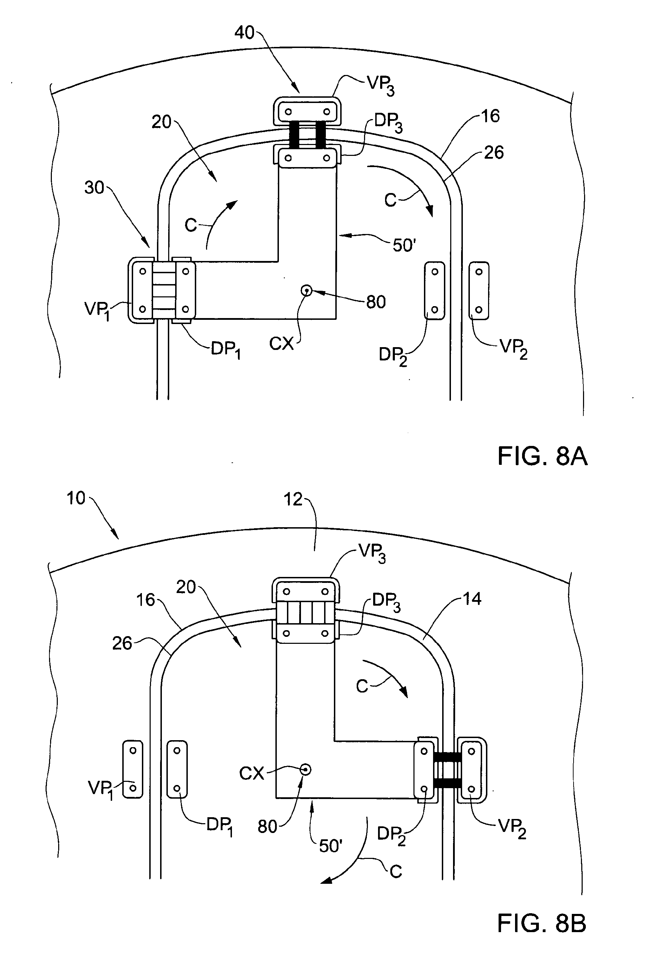

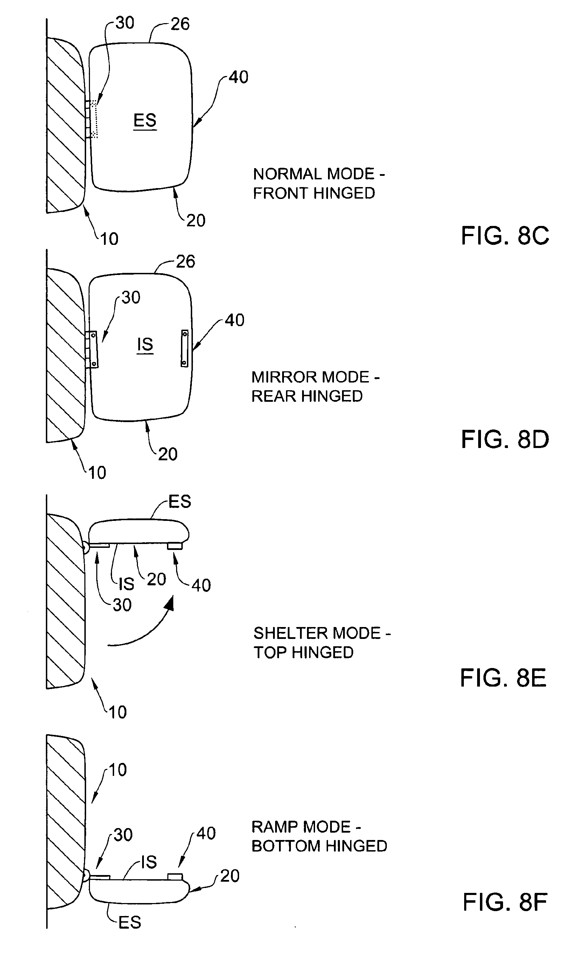

Turning now to Figs. 8A and 8B, an **IDA** is shown comprising a base generally designated **50'** which has an L shape different from the straight shape of the base **50,** and has mounted at its one end the hinge unit **30** and at its another end the locking unit **40.** The vehicle and the door are each pre-formed with two additional attachment ports **VP₃, DP₃,** and **VP₄, DP₄** (not shown) respectively.

With reference to Figs. 8C to 8F, the **IDA** may be designed to assume four positions allowing the door **20** to open in two additional configurations: the *'shelter'* configuration in which the door **20** is top-hinged, i.e. opens upwards (shown Fig. 8B) imitating a roof, and a *'ramp'* configuration in which the door **20** is bottom-hinged, i.e. opens downwards, imitating a ramp.

It should be understood that a plurality of configurations may be achieved depending on the shape of the base **50, 50'** and the locations of the attachment ports.

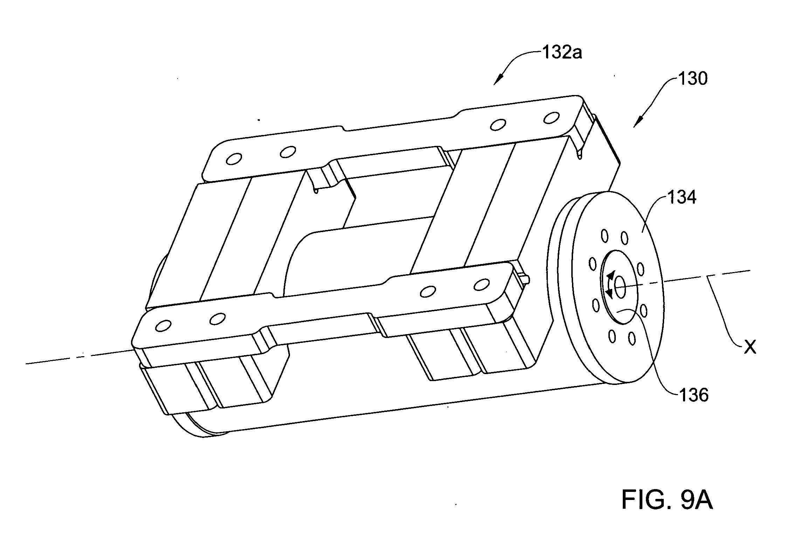

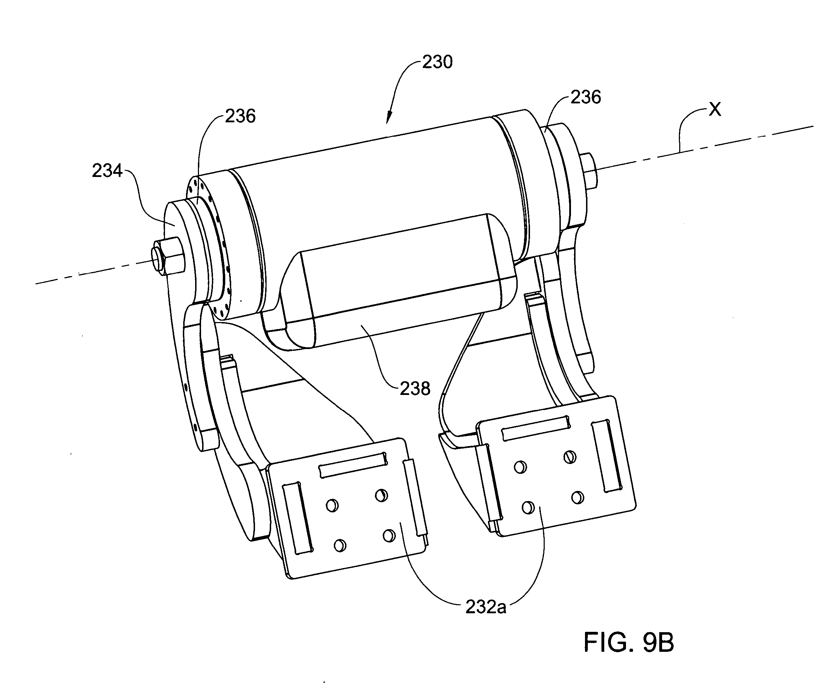

Turning now to Figs. 9A and 9B, two other examples of the **IDA** are shown, in which the **IDA** comprises a combined hinge and locking unit in the form of a motorized internal hinge, which may be selectively switched between three main operating modes: clockwise rotation (CW), counter clockwise rotation (CCW), and fixed state.

With particular reference to Fig. 9A, the **IDA** is shown comprising a motorized hinge **130,** having a first hinge portion **132a** adapted for attachment to a vehicle-port **VP** and a main shaft **136,** constituting a second hinge portion, rotatable by an internal motor (not shown). In assembly, the first hinge portion **132a** is attached, for example, to a vehicle-port and the door **20** is attached to the shaft **136.**

In operation, the door **20** may be opened, for example, by switching the motorized hinge **130** of the **IDA** to its CW operating mode, closed by switching the motorized hinge **130** of the **IDA** to its CCW operating mode, and locked in place by switching the motorized hinge **130** of the **IDA** to its fixed operating mode. In this way, the motorized hinge functions both as the hinge unit **30** previously described, and as the locking unit **40.**

A similar example is shown in Fig. 9B in which the motorized hinge, generally designated **230,** has two first hinge portions **232a,** and an external casing **238** for the motor (not shown). In this case, similarly to the previous, the first portions **232a** are attached, for example to the vehicle-ports, and the main shaft **236** is attached to the door **20.**

In both of the above examples, operation of the motorized hinge **130, 230** is controlled by an actuating mechanism (not shown) adapted for determining the operating mode thereof. The actuating mechanism may comprise and actuator (also not shown) which may be, for example, a door handle. The door handle may be sensitive to the pressure applied thereto so as to determine whether to apply a **CW** operating mode or a **CCW** operating mode for selectively opening/closing the door.

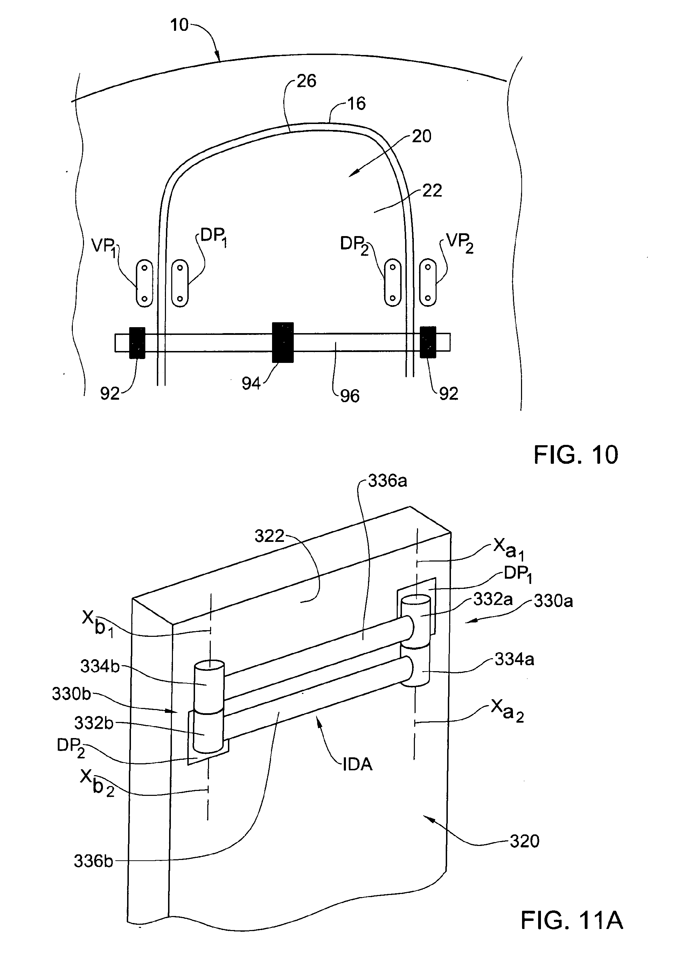

Turning now to Fig. 10, the vehicle wall **10** and vehicle door **20** are shown provided with a security mechanism **90,** adapted for holding the door 20 in place during the switching of the door opening configuration, i.e. during removal of the IDA and attachment thereof at a different configuration.

The security mechanism **90** comprises a set of rings - two vehicle rings **92** attached to the vehicle wall **10,** along the circumference **16** of the opening **14,** one on each side of the door, and a door ring **94** attached to the door **20.** The rings **02, 94** are arranged such that a security shaft **96** may be passed therethrough. Once passing the security shaft **96** through the rings **92, 94,** the door **20** is prevented from disengaging the opening **14,** and the **IDA** may be removed from the door **20** and replaced at the desired configuration. Such an arrangement may allow an operator to change the opening configuration of the door **20** from within the vehicle **V.**

Turning now to Figs. 11A to 11D, an IDS generally designated as **3** is shown comprising a vehicle wall **310** (partially shown) of a vehicle body (not shown), a door **320** and an interchangeable door arrangement IDA attached to both the vehicle wall **310** and the vehicle door **320.**

With particular reference to Fig. 11A, the IDA is constituted by two hinge bars, **336a** and **336b** respectively, each having a door hinge **332a, 332b** adapted for attachment to a vehicle door via a door-port, and a vehicle hinge **334a, 334b** adapted for attachment to a vehicle via a vehicle-port. Each of the door-hinges **332a, 332b** and vehicle-hinges **334a, 334b** defines a central axis.

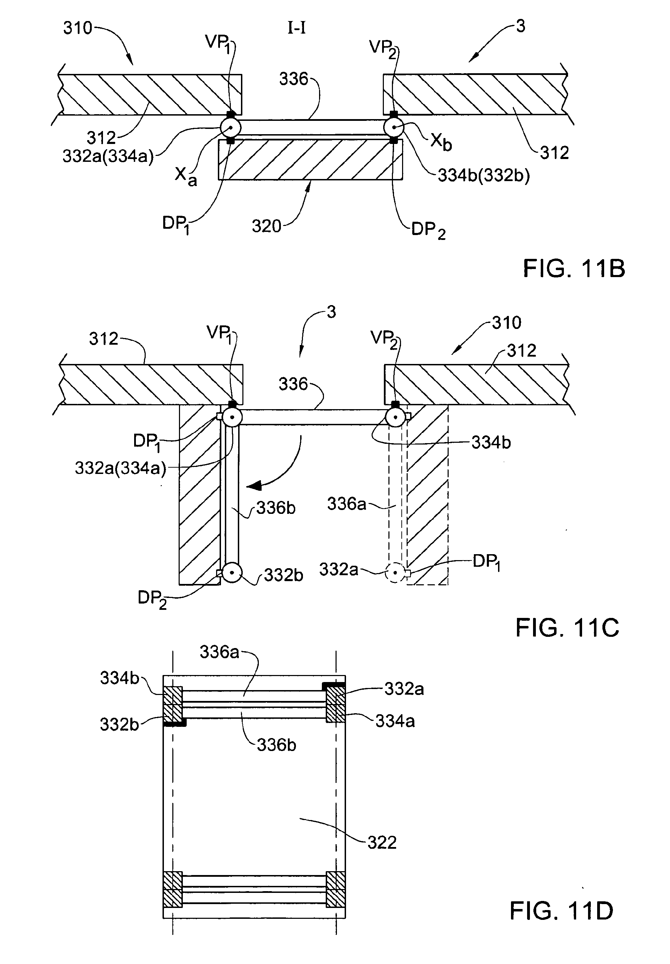

In assembly, as shown in the particular example, the door-hinge **332a** of the first hinge bar **336a** is attached to a door-port **DP₁** on one side of the vehicle door **310,** while the door-hinge **332b** of the second hinge bar **336b** is attached to a door-port **DP₂** on the other side of the vehicle door **310.** In this particular example, the hinge bars **336a, 336b** are of the same length, and are positioned one on top of the other, such that in the closed position shown in Fig. 11D, central axis **Xa₁** of the door-hinge **332a** is co-aligned with central axis of the vehicle-hinge **334a Xa₂** to constitute a first central axis **X_{A},** whereby the central axis **Xb₁** of the door-hinge **332b** is co-aligned with the central axis **Xb₂** of the vehicle-hinge **334b** to constitute a first central axis **X_{B}.**

Turning now to Fig. 11B, the arrangement is such that the door-hinge **332a** of the first hinge bar **336a** is attached to the first door-port **DP₁,** and the vehicle-hinge **334b** of the first hinge bar **336a** is attached to the second vehicle-port **VP₂.** The second hinge bar **336b** is attached in an opposite manner, i.e. the door-hinge **332b** of the second hinge bar **336b** is attached to the second door-port **DP₁,** and the vehicle-hinge **334a** of the second hinge bar **336b** is attached to the first vehicle-port **VP₁.**

It is appreciated that from the position shown in Fig. 11B, the vehicle door **320** is geometrically prevented from displacing in a direction perpendicular to the vehicle wall **310** since the distance between the door-hinges **332a, 332b** is fixed, as well as the distance between the vehicle-hinges **334a, 334b.**

Attention is now drawn to Fig. 11C, in which one possible opening configuration of the vehicle door **320** is shown. Due to the particular arrangement described above, the vehicle door **320** may open in one of two configurations: as a front-hinged door, and as a rear-hinged door. When opened as a front-hinged door, as shown in Fig. 11C, the entire vehicle door **320** revolves about the central axis **Xa₂,** such that effectively, the second hinge bar **336b** extends perpendicular to the vehicle wall **310,** and the first hinge bar **336a** remains in its original position. It should be particularly noted that no physical attachment exists between the door-hinge **332a** and the vehicle-hinge **334a,** and that alignment between the axes **Xa₁** and **Xa₂** is maintained throughout the above described door opening due to a geometric lock.

With further reference to Fig. 11C, the vehicle door **320** is also shown in a rear-hinged opening configuration (in phantom lines). In this opening configuration, the roles are reversed, and the second hinge bar **336b** remains in place while the first hinge bar **336a** revolves about the central axis **Xb₁.**

Thus, the above arrangement provides an easy an convenient door opening configuration allowing an operator to effectively choose *'on the spot'*, which door configuration to use. Specifically, should an operator wish to open the vehicle door **320** in a front-hinge configuration, he should simply apply pressure to the opposite side of the door, i.e. to its rear, and vise versa. The above vehicle door **320** may be provided with two handles allowing the operator to easily maneuver the door into the desired configuration.

The IDS **3** may also comprise one or more locking mechanisms adapted for preventing disengagement of the vehicle door **320** from the vehicle wall opening **314.** Specifically, the IDS **3** may comprise a first locking mechanism (not shown) associated with the front side of the door (i.e. where the door-hinge **332a** and vehicle hinge **334a** are located) adapted for preventing disengagement of the front side of the vehicle door **320** from the respective portion of the vehicle wall **310,** and a second locking mechanism (not shown) associated with the rear side of the door (i.e. where the door-hinge **332b,** and vehicle hinge **334b** are located) adapted for preventing disengagement of the rear side of the vehicle door **320** from the respective portion of the vehicle wall **310.**

The locking mechanisms may be adapted to work simultaneously, i.e. assume a locked/unlocked position together at the same time. Alternatively, the locking mechanisms may be designed such that when the vehicle door **320** is opened in a front-hinged configuration, the first locking mechanism becomes unlocked while the second locking mechanism remains locked, and when the vehicle door **320** is opened in a rear-hinged configuration, the second locking mechanism becomes unlocked while the first locking mechanism remains locked.

The various IDAs described above may be implemented in any vehicle, and in particular, in armored vehicles adapted for transporting military personnel to or from a specific location. The versatility of changing the door opening configuration may be very useful for military personnel, allowing them to choose the desired door opening configuration for a specific mission. In addition, some of the described embodiments may allow military personnel to decide, even *'on site',* which door opening configuration to use.

Those skilled in the art to which this invention pertains will readily appreciate that numerous changes, variations, and modification can be made without departing from the scope of the invention, *mutatis mutandis*.

## Claims

1. An interchangeable door system (IDS) having a central axis and at least two different opening configurations defined by corresponding different locations of said central axis, the system comprising:
- a wall formed with a wall opening having a circumferential rim, said wall having a surface pre-formed with at least a first and a second surface-port, the first and second surface-ports being located along said circumferential rim at locations spaced apart from one another along a direction transverse to said central axis;
- a door having an outer contour corresponding in shape and dimensions to said opening and being adapted for revolving about said central axis, thereby opening and closing said wall opening, said door being pre-formed with at least a first and a second door-port, the door-ports being located along said outer contour at locations corresponding to the locations of said first and second surface-ports; and
- an interchangeable door arrangement (IDA) adapted to provide selective engagement between each door-port and its corresponding surface-port, forming an engaged port-pair whose location defines the location of the central axis, to thereby bring said central axis into a location of the engaged port-pair, so as to allow said door to operate in said different configurations.

2. An IDS according to Claim 1, wherein said wall is a part of a vehicle such that the surface-ports are vehicle ports, and optionally said wall and/or said door are armored, having at least a portion thereof comprising a base to be protected and an armor layer attached to said base and facing the exterior of the vehicle.

3. An IDS according to Claim 2, wherein said vehicle comprises front and rear openings, fitted with respective front and rear doors, one or both doors being fitted with said IDA.

4. An IDS according to Claim 3, wherein each door is formed with the first and the second door-port, one of which is closer to the vehicle front and the other is closer to the vehicle rear, and each opening is correspondingly formed with a first and a second vehicle-port at locations corresponding to the locations of said first and second door-port.

5. An IDS according to Claim 4, wherein any one of the front and rear doors is adapted, by virtue of said IDA, to selectively function as one of a front-hinged door and a rear-hinged door, depending on the position of the IDA, optionally enabling the doors to function in any one of the following modes is provided:
i. *'first normal mode'* where both doors are front-hinged;
ii. *'first mirror mode'* where the front door is front-hinged while the rear door is rear-hinged;
iii. *'second normal mode'* where both doors are rear-hinged; and
iv. *'second mirror mode'* where the front door is rear-hinged and the rear door is front-hinged.

6. An IDS according to any one of Claims 2 to 5, wherein said IDA comprises a hinge unit having a first hinge portion and a second hinge portion articulated to one another via a hinge whose axis constitutes said central axis, to allow said door to revolve about said central axis, wherein said hinge unit is adapted for being selectively attached to each one of the first or second door-port and corresponding vehicle-port, to form an engaged port-pair, so as to determine a desired opening configuration of the doors.

7. An IDS according to Claim 6, wherein said IDS further comprises a securing mechanism built in within the vehicle, and adapted for supporting the vehicle door from disengaging from the wall of the vehicle, when changing its opening configuration, e.g. when dismounting the hinge unit from one vehicle-port/door-port pair and mounting it on another pair.

8. An IDS according to Claim 7, wherein said IDA further comprises a locking unit constructed for selectively allowing said vehicle door to assume a first, locked position, in which said vehicle door is prevented from revolving about said axis, and a second, unlocked position in which said vehicle door is free to revolve about said axis, said IDS optionally comprising an actuator for said locking unit, said actuator being activated by a handle of the vehicle door.

9. An IDS according to Claim 8, wherein said hinge unit and said locking unit are mounted on a mutual base constructed, in turn, to be mounted onto said vehicle door.

10. An IDS according to Claim 8 or 9, wherein said hinge unit and said locking unit are integrally formed, constituting an assembly adapted for attachment to a single port pair.

11. An IDS according to Claim 10, wherein said assembly is in the form of a motorized hinge, wherein revolution of said first hinge portion about said second hinge portion is controlled by a built-in motor of the hinge.

12. An IDS according to Claim 11, wherein said motorized hinge is adapted for retaining the position of the door at any stage of opening/closing thereof, whereby a 'locked position' is defined as any position of the door in which the motor of the hinge prevents the door from revolving about the central axis.

13. An IDS according to any one of Claims 8 to 12, wherein said hinge unit and said locking unit are mounted onto the internal side of the vehicle and the door such that they are protected by the vehicle itself.

14. An IDS according to Claim 13, wherein engagement between each vehicle-port and its corresponding door-port is performed on a remote site different from the manufacturing site of the vehicle, to assume a desired configuration, and wherein said remote site is any one of the following:
i. *'a base site'*, which is a site where the vehicles are located before departing to a new location;
ii. *'close proximity site'*, which is any site on the way to said new location; and even;
iii. *'on site'*, which is any site at said new location.

15. An interchangeable door system (IDS) having two parallel central axes and two different opening configurations corresponding to said two central axes, the system comprising:
i. a wall formed with a wall opening having a circumferential rim, said wall having a surface pre-formed with at least a first and a second surface-port, the first and second surface-ports being located along said circumferential rim at locations opposite one another along a direction perpendicular to said central axes;
ii. a door having an outer contour corresponding in shape and dimensions to said opening and being adapted for revolving about both said central axes, thereby opening and closing said wall opening, said door being pre-formed with at least a first and a second door-port, the door-ports being located along said outer contour at locations corresponding to the locations of said first and second surface-ports; and
iii. an interchangeable door arrangement (IDA) comprising a first hinge arm connecting said first surface-port with said second door-port and a second hinge arm connecting said second surface-port with said first door-port, so as to allow said door to operate in said different configurations.
